# EUROPÄISCHE PATENTSCHRIFT

(11) **EP 3 317 071 B1**
(45) Veröffentlichungstag und Bekanntmachung des Hinweises auf die Patenterteilung: **07.08.2019**
(21) Anmeldenummer: 16740936.6
(22) Anmeldetag: 24.06.2016
(51) Int. Cl.: B29C 45/23, B29C 45/28, F16K 25/00

(54) **VENTILVORRICHTUNG FÜR WENIGSTENS EINE FLÜSSIGE KUNSTSTOFFKOMPONENTE**
VALVE MECHANISM FOR AT LEAST ONE LIQUID PLASTIC COMPONENT
ENSEMBLE VANNE POUR AU MOINS UN CONSTITUANT PLASTIQUE LIQUIDE

(30) Priorität: 03.07.2015 AT 4312015
(43) Veröffentlichungstag der Anmeldung: 09.05.2018
(73) Patentinhaber: Sonderhoff Engineering GmbH, 6850 Dornbirn (AT)
(72) Erfinder: SCHWABL, Christian, 6900 Bregenz (AT); METZLER, Mario, 6890 Lustenau (AT)
(74) Vertreter: Torggler & Hofinger Patentanwälte
(86) Internationale Anmeldenummer: PCT/AT2016/050224
(87) Internationale Veröffentlichungsnummer: WO 2017/004633

(56) Entgegenhaltungen:
- EP-A2- 2 586 536
- WO-A1-2014/080346
- WO-A1-2014/085321
- DE-A1- 2 150 717
- DE-A1-102012 211 283
- DE-U1- 8 812 456
- DE-U1-202014 102 940
- US-A- 4 073 469
- US-A- 4 416 608
- US-A1- 2010 047 379

## Beschreibung

Die Erfindung betrifft eine Ventilvorrichtung mit den Merkmalen des Oberbegriffs von Anspruch 1, ein Dosierventil mit einer solchen Ventilvorrichtung und eine Dosiervorrichtung mit einer solchen Ventilvorrichtung und/oder einem solchen Dosierventil.

Derartige Ventilvorrichtungen, Dosierventile bzw. Dosiervorrichtungen dienen bevorzugt dem Beeinflussen von Strömen von flüssigem Kunststoff oder flüssigen Kunststoffkomponenten. Dosierventile sind zum Beispiel Teil von Dosiervorrichtungen, welche zur Herstellung von Verklebungen, Vergussapplikationen oder, insbesondere geschäumter, Dichtungen dienen.

Im Spritzgießmaschinenbereich sind Verschlussnadeln für Einspritzdüsen aus der US 4,416,608, aus der US 4,073,469 und aus der DE 2 150 717 A1 bekannt. Ein leckage- und schlupfreduziertes Ventil eines Kraftstoffinjektors ist aus der DE 10 2012 211 283 A1 bekannt.

Sensoren zum Messen einer Position einer Verschlussnadel einer Spritzgießmaschine sind aus der US 2010/0047379 A1 und der WO 2014/085321 A1 bekannt, wogegen die DE 20 2014 102 940 U1 ein Ventil mit einem Stößel und einem induktiven Sensor zur Erfassung eines Verstellwegs des Stößels zeigt.

Bisher wurden sowohl Nadel als auch Sitz aus Metall gefertigt, wobei es bereits bekannt war den Sitz aus einem weicheren Metall als die Nadel zu fertigen. Nach mehreren hundert Verschlussvorgängen hat sich der weichere Sitz plastisch an die Kontur der Nadel angeformt. Tauscht man Nadel und/oder Sitz aus, ist ein sicherer Verschlussvorgang allerdings nicht mehr gegeben. Außerdem ist es zeitaufwändig vor Inbetriebnahme der Ventilvorrichtung die notwendigen mehreren hundert Verschlussvorgänge durchzuführen. Kommt es zu einem Einklemmen von Fremdkörpern zwischen Nadel und Sitz, kann der Fremdkörper eine Kerbe oder eine Vertiefung im Sitz verursachen, sodass ein sicherer Verschluss nicht mehr gewährleistet ist. Zwar kommt es natürlich auch bei einer metallischen Nadel oder einem metallischen Sitz zu einer gewissen Verformung, dies ist allerdings messtechnisch nicht nachweisbar.

Die Aufgabe der vorliegenden Erfindung besteht darin, eine Ventilvorrichtung, ein Dosierventil oder eine Dosiervorrichtung bereitzustellen, bei welcher bzw. welchem die oben diskutierten Nachteile nicht auftreten.

Diese Aufgabe wird durch eine Ventilvorrichtung mit den Merkmalen des Anspruchs 1, ein Dosierventil mit einer solchen Ventilvorrichtung und eine Dosiervorrichtung mit einer solchen Ventilvorrichtung und/oder einem solchen Dosierventil erreicht. Vorteilhafte Ausführungsformen der vorliegenden Erfindung sind in den abhängigen Ansprüchen definiert.

Die Erfindung ermöglicht es, bei Gewährleistung der Verschleißfestigkeit:
- Nadel und Sitz so aneinander anzupressen, dass auch ohne zeitaufwändige Vorbereitungshandlungen sofort ein sicherer Verschluss gestattet ist.
- Nadel und Sitz wenn notwendig zu überdrücken, das heißt, dass die Nadel relativ zum Sitz über den eigentlichen Dichtpunkt hinausbewegt werden kann.
- aufgrund der Nachgiebigkeit und der damit verbunden Relativbewegung von Nadel und Sitz eine Messung vorzunehmen, welche eine Beurteilung des Verschlusszustandes ermöglicht.

In einer ersten Variante sind Nadel und/oder Sitz selbst nachgiebig ausgebildet. Zum Beispiel kann vorgesehen sein, dass die Nadel und/oder der Sitz wenigstens abschnittsweise aus Kunststoff bestehen. Dieser Kunststoff kann prinzipiell plastisch verformbar sein. Bevorzugt ist allerdings vorgesehen, dass dieser Kunststoff elastisch oder zumindest teilelastisch verformbar ist. Die teilelastische Verformbarkeit wird so verstanden, dass nur ein kleiner Bereich auch plastisch verformbar ausgebildet ist. Es muss also der Kunststoff nicht über die komplette Ausdehnung elastisch verformbar sein. Es können also vor allem Randbereiche oder Teilbereiche zumindest teilweise plastisch verformbar sein. Allfällige Kerben oder Vertiefungen im Sitz und/oder der Nadel werden durch den Anpressdruck ausgeglichen. Bevorzugt ist vorgesehen, dass der Kunststoff der Nadel und/oder des Sitzes PEK (Polyetherketon), vorzugsweise PEEK (Polyetheretherketon), ist.

In einer zweiten Variante, die gegebenenfalls auch gemeinsam mit der ersten Variante eingesetzt werden kann, ist bevorzugt vorgesehen, dass die Nadel über eine Nadellagerung und/oder der Sitz über eine Sitzlagerung nachgiebig gelagert sind/ist, wobei die Nadellagerung und/oder die Sitzlagerung einen Kraftspeicher oder einen elastisch oder teilelastisch verformbaren Abschnitt aufweisen/aufweist.

Erfindungsgemäß ist weiters vorgesehen, dass wenigstens ein Sensor zur - vorzugsweise berührungslosen - Positionsüberwachung der Position der Nadel und/oder des Sitzes und/oder der Nadellagerung und/oder der Sitzlagerung vorgesehen ist, dessen Signale einer Auswerteeinrichtung zuführbar sind, welche aus den Signalen ein für das Verschließen charakteristisches Signal bestimmt, wobei in der Auswerteeinrichtung wenigstens zwei Positionen abgelegt sind, welche charakteristisch für vorgegebene Schließzustände der Verschlussvorrichtung sind.

Bei einem erfindungsgemäßen Dosierventil kann vorgesehen sein, dass eine Ausbringöffnung des Dosierventils durch die wenigstens eine Ventilvorrichtung verschließbar ist. Alternativ oder zusätzlich kann vorgesehen sein, dass eine Eintrittsöffnung einer Rezirkulationsleitung durch die wenigstens eine Ventilvorrichtung verschließbar ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert.

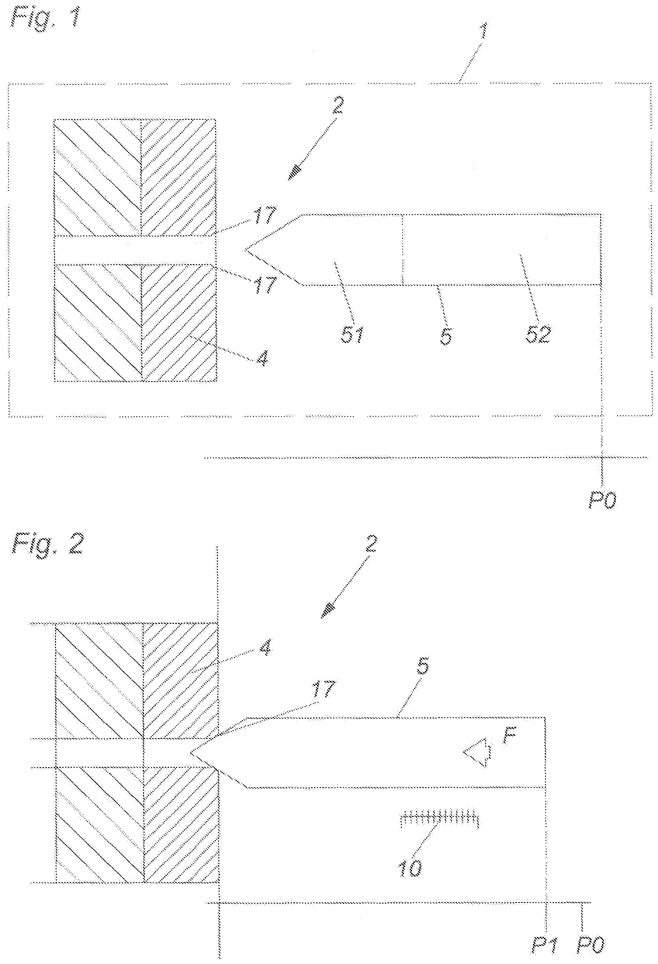

Fig. 1 zeigt eine schematisch dargestellte Ventilvorrichtung 1 mit einer Ventilöffnung 3. Es ist eine Verschlussvorrichtung 2 zum Verschließen der Ventilöffnung 3 vorgesehen mit einem Sitz 4 und einer Nadel 5. Im gezeigten Ausführungsbeispiel kann die Nadel 5 zur Gänze nachgiebig ausgebildet sein, z.B. aus einem entsprechenden Kunststoff bestehen oder sie kann - wie durch die strichlierte Linie angedeutet - nur abschnittsweise (z.B. nur im vorderen Bereich 51 oder im hinteren Bereich 52) nachgiebig ausgebildet sein. Der Sitz 4 kann entweder aus einem nicht-nachgiebigen Material wie beispielsweise Metall oder aus einem nachgiebigen Material, z.B. einem geeigneten Kunststoff, bestehen. Erkennbar ist, dass der Sitz 4 eine (umlaufende) Fase 17 zur Verringerung der Flächenpressung im Bereich der Kontaktstelle mit der Nadel 5 aufweist. Im gezeigten Ausführungsbeispiel ist die Ventilöffnung 3 vollständig geöffnet und die Nadel 5 hat keinen Kontakt mit dem Sitz 4. Dies entspricht der Position P0 der Nadel 5.

Fig. 2 zeigt die Ventilvorrichtung 1 gemäß Fig. 1 in einem geänderten Zustand. In diesem Zustand ist die Nadel 5 so weit relativ zum Sitz 4 bewegt, bis die Nadel 5 den Sitz 4 ohne Anpressdruck kontaktiert. Der Anpressdruck (ergibt sich aus Anpresskraft F dividiert durch die Fläche der Fase 17) wird über eine - beispielsweise pneumatische, hydraulische oder kraftspeicherbasierte - hier nicht dargestellte Antriebsvorrichtung erzeugt. Dies entspricht der Position P1 der Nadel 5.

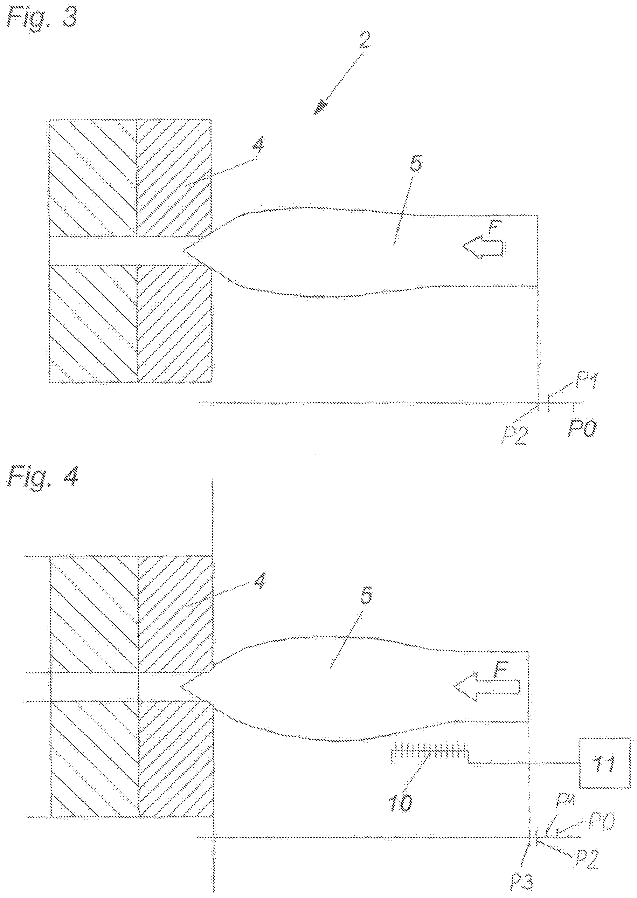

Fig. 3 zeigt die Ventilvorrichtung 1 gemäß den Fig. 1 und 2 in jenem Zustand, in welchem die Nadel 5 mit dem vorgegebenen Anpressdruck an den Sitz 4 angepresst wird. Dies entspricht der Position P2 der Nadel 5.

Fig. 4 zeigt die Ventilvorrichtung 1 gemäß den Fig. 1, 2 und 3 in jenem Zustand, in welchem die Nadel 5 gegenüber dem Sitz 4 überdrückt wird. Durch die nachgiebige Ausbildung der Nadel 5 kommt es zu einer übertrieben dargestellten Verformung der Nadel 5. Allfällige Kerben oder Vertiefungen in Nadel 5 und/oder Sitz 4 können dadurch ausgeglichen werden, was ein sicheres Verschließen der Ventilöffnung 3 durch die Verschlussvorrichtung 2 gewährleistet. Dies entspricht der Position P3 der Nadel 5.

Die durch das Überdrücken der Nadel 5 verursachte Änderung der Position von P2 auf P3 lässt sich gut messen, z.B. über einen exemplarisch dargestellten Sensor 10, der mit einer Auswerteeinrichtung 11 in Verbindung steht. Ist ein Kalibriervorgang erfolgt, so weiß die Auswerteeinrichtung 11, welche der Positionen der Nadel 5 einem sicheren Verschließen der Verschlussvorrichtung 2 entspricht und es kann durch die Anwendung des Federgesetzes bei bekannter Federsteifigkeit auch ausgewertet werden, wie groß die entsprechende Anpresskraft F bzw. der Anpressdruck ist. Es kann aber ausreichend sein zu wissen, dass P3 um ein vorbestimmtes Ausmaß größer ist als P2 (ohne auch die Anpresskraft F zu ermitteln).

Ein numerisches (nicht beschränkendes) Beispiel:
- P0 = -2 mm
- P1 = 0 mm
- P2 = 0,05 mm
- P3 = 0,10 mm
- Innendurchmesser der Fase = 2 mm
- Dicke (Durchmesser) der Nadel = 5 mm
- Länge der Nadel = 20 mm

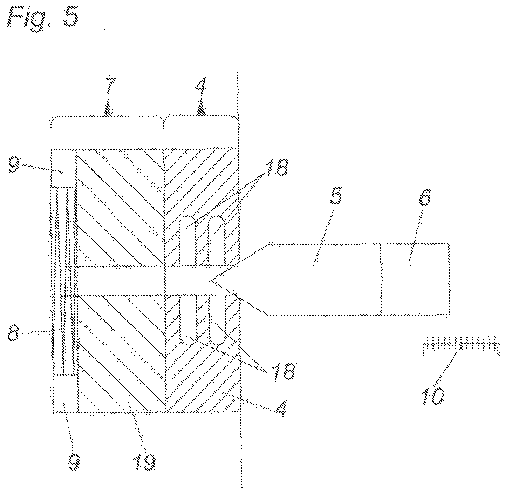

Alternative Ausbildungen von Sitz 4 und/oder Nadel 5 sind in der folgenden Fig. 5 gezeigt, die eine Ventilvorrichtung 1 in einem nicht dargestellten Gehäuse zeigt.

Auf der linken Seite sind mögliche Varianten von nachgiebiger Ausbildung des Sitzes 4 und/oder nachgiebiger Sitzlagerung 7 kumulativ dargestellt. Die gezeigten Varianten können auch einzeln oder in beliebiger Kombination eingesetzt werden.

Zu sehen sind:
- hintereinander angeordnete Querschnittsschwächungen 18 zur nachgiebigen Ausbildung des Sitzes 4;
- nachgiebige, teilelastische oder elastische Schicht 19 zur nachgiebigen Sitzlagerung 7, z.B. umfassend PEK, PEEK, PU (Polyurethan), Gummi, Silikon, etc.;
- ein Kraftspeicher 8 in Form einer Druckfeder und ein nur abschnittsweise dargestellter, vorzugsweise elastisch, verformbarer Abschnitt 9, der anstatt oder zusätzlich zum Kraftspeicher 8 vorgesehen sein kann, zur nachgiebigen Ausbildung des Sitzes 4 und/oder der nachgiebigen Sitzlagerung 7;

Die gezeigten und beschriebenen Maßnahmen für die Sitzlagerung 7 sind zusätzlich oder alternativ auch für die nur schematisch dargestellte Nadellagerung 6 einsetzbar.

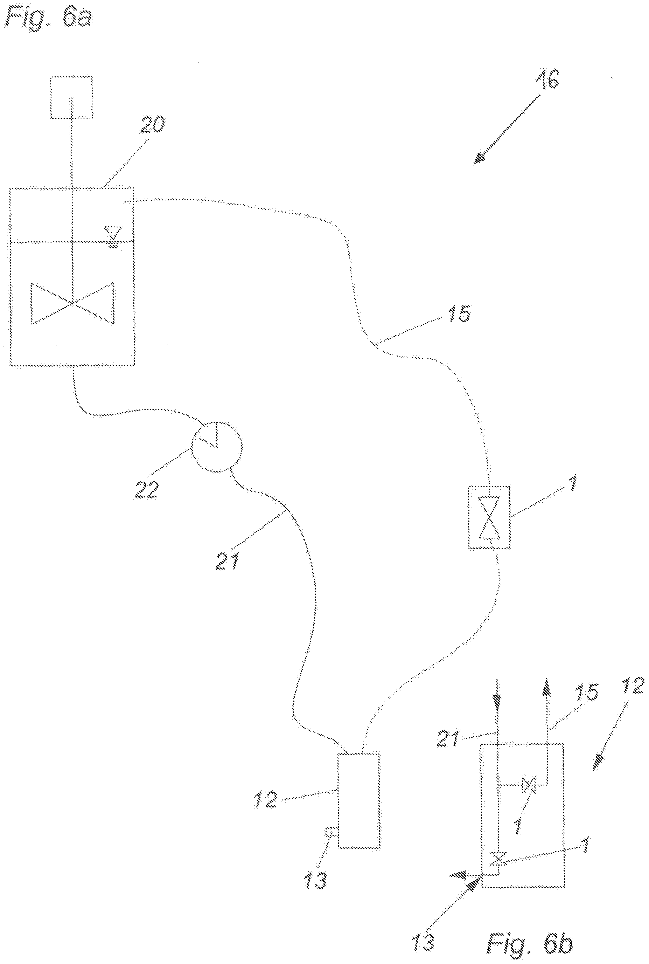

Fig. 6a zeigt eine Dosiervorrichtung 16 mit einem Vorratsbehälter 20 für einen flüssigen Kunststoff oder eine flüssige Kunststoffkomponente und mit einem Dosierventil 12. Über eine Leitung 21 kann der flüssige Kunststoff oder die flüssige Kunststoffkomponente vom Vorratsbehälter 20 mittels einer Pumpe 22 zu einem Dosierventil 12 gefördert werden kann. Das Dosierventil 12 kann eine erfindungsgemäße Ventilvorrichtung 1 aufweisen (siehe Detail in Fig. 6b). Im gezeigten Detail von Fig. 6b sind zwei Ventilvorrichtungen 1 vorhanden: einmal zum Verschließen einer Ausbringöffnung 13 des Dosierventils 12 und einmal zum Absperren einer zum Vorratsbehälter 20 zurückführenden Rezirkulationsleitung 15. Eine weitere Ventilvorrichtung 1 ist exemplarisch in der Rezirkulationsleitung 15 dargestellt. Weitere Ventilvorrichtungen 1 können an erforderlichen Positionen nach Belieben eingesetzt werden.

### Bezugszeichenliste

- 1: Ventilvorrichtung
- 2: Verschlussvorrichtung
- 3: Ventilöffnung der Ventilvorrichtung
- 4: Sitz der Verschlussvorrichtung
- 5: Nadel der Verschlussvorrichtung
- 51: vorderer Bereich der Nadel
- 52: hinterer Bereich der Nadel
- 6: Nadellagerung der Nadel
- 7: Sitzlagerung des Sitzes
- 8: Kraftspeicher
- 9: elastisch verformbarer Abschnitt
- 10: Sensor
- 11: Auswerteeinrichtung
- 12: Dosierventil
- 13: Ausbringöffnung
- 14: Eintrittsöffnung
- 15: Rezirkulationsleitung
- 16: Dosiervorrichtung
- 17: Fase
- 18: Querschnittsschwächung des Sitzes
- 19: teilelastische oder elastische Schicht
- 20: Vorratsbehälter
- 21: Leitung
- 22: Pumpe
- P0,P1,P2,P3: Positionen der Nadel
- F: Anpresskraft

## Patentansprüche

1. Ventilvorrichtung (1) für wenigstens eine flüssige Kunststoffkomponente oder flüssigen Kunststoff, mit einer Verschlussvorrichtung (2), welche zum Verschließen einer Ventilöffnung (3) der Ventilvorrichtung (1) eine gegen einen Sitz (4) pressbare Nadel (5) aufweist, wobei die Nadel (5) und/oder der Sitz (4) nachgiebig ausgebildet oder gelagert sind/ist, wobei die Nadel (5) relativ zum Sitz (4) über einen eigentlichen Dichtpunkt hinausbewegt werden kann, **dadurch gekennzeichnet dass** wenigstens ein Sensor (10) zur - vorzugsweise berührungslosen - Positionsüberwachung der Position der Nadel (5) und/oder des Sitzes (4) und/oder der Nadellagerung (6) und/oder der Sitzlagerung (7) vorgesehen ist, dessen Signale einer Auswerteeinrichtung (11) zuführbar sind, welche aus den Signalen ein für das Verschließen charakteristisches Signal bestimmt, wobei in der Auswerteeinrichtung (11) wenigstens zwei Positionen (P1, P2) abgelegt sind, welche charakteristisch für vorgegebene Schließzustände der Verschlussvorrichtung (2) sind.

2. Ventilvorrichtung nach Anspruch 1, **dadurch gekennzeichnet, dass** die Nadel (5) und/oder der Sitz (4) wenigstens abschnittsweise aus Kunststoff bestehen.

3. Ventilvorrichtung nach Anspruch 2, **dadurch gekennzeichnet, dass** der Kunststoff der Nadel (5) und/oder des Sitzes (4) elastisch oder zumindest teilelastisch verformbar ist.

4. Ventilvorrichtung nach Anspruch 2 oder 3, **dadurch gekennzeichnet, dass** der Kunststoff der Nadel (5) und/oder des Sitzes (4) PEK, vorzugsweise PEEK, ist.

5. Ventilvorrichtung nach wenigstens einem der vorhergehenden Ansprüche, **dadurch gekennzeichnet, dass** die Nadel (5) über eine Nadellagerung (6) und/oder der Sitz (4) über eine Sitzlagerung (7) nachgiebig gelagert sind/ist, wobei die Nadellagerung (6) und/oder die Sitzlagerung (7) einen Kraftspeicher (8) oder einen, vorzugsweise elastisch, verformbaren Abschnitt (9) aufweisen/aufweist.

6. Dosierventil (12) zum dosierten Ausbringen wenigstens einer flüssigen Kunststoffkomponente oder flüssigen Kunststoffes mit wenigstens einer Ventilvorrichtung (1) nach wenigstens einem der Ansprüche 1 bis 5.

7. Dosierventil nach Anspruch 6, **dadurch gekennzeichnet, dass** eine Ausbringöffnung (13) des Dosierventils (12) durch die wenigstens eine Ventilvorrichtung (1) verschließbar ist.

8. Dosierventil nach Anspruch 6 oder 7, **dadurch gekennzeichnet, dass** eine Eintrittsöffnung (14) einer Rezirkulationsleitung (15) durch die wenigstens eine Ventilvorrichtung (1) verschließbar ist.

9. Dosiervorrichtung (16) mit einem Vorratsbehälter (20) für flüssigen Kunststoff oder wenigstens eine flüssige Kunststoffkomponente und wenigstens einer Ventilvorrichtung (1) nach wenigstens einem der Ansprüche 1 bis 5 und/oder einem Dosierventil (12) nach wenigstens einem der Ansprüche 6 bis 8.

## Claims

1. A valve device (1) for at least one liquid plastic component or liquid plastic, comprising a closure device (2) which has a needle (5) which can be pressed against a seat (4) for closing a valve opening (3) of the valve device (1), wherein the needle (5) and/or the seat (4) is/are adapted to be yielding or mounted yieldingly, wherein the needle (5) can move relative to the seat (4) beyond the actual sealing point, **characterized in that** at least one sensor (10) for - preferably contact-less - position monitoring of the position of the needle (5) and/or the seat (4) and/or the needle mounting (6) and/or the seat mounting (7), the signals of which can be fed to an evaluation device (11) which from the signals determines a signal which is characteristic of the closure action, wherein stored in the evaluation device (11) are at least two positions (P1, P2) which are characteristic of predetermined closure states of the closure device (2).

2. A valve device as set forth in claim 1 **characterised in that** the needle (5) and/or the seat (4) at least portion-wise comprise plastic.

3. A valve device as set forth in claim 2 **characterised in that** the plastic of the needle (5) and/or the seat (4) is elastically or at least partially elastically deformable.

4. A valve device as set forth in claim 2 or claim 3 **characterised in that** the plastic of the needle (5) and/or the seat (4) is PEK, preferably PEEK.

5. A valve device as set forth in at least one of the preceding claims **characterised in that** the needle (5) and/or the seat (4) is/are mounted yieldingly by way of a needle mounting (6) and by way of a seat mounting (7) respectively, wherein the needle mounting (6) and/or the seat mounting (7) has/have a force storage means (8) or a preferably elastically deformable portion (9).

6. A metering valve (12) for metered discharge of at least one liquid plastic component or liquid plastic comprising at least one valve device (1) as set forth in at least one of claims 1 through 5.

7. A metering valve as set forth in claim 6 **characterised in that** a discharge opening (13) of the metering valve (12) is closeable by the at least one valve device (1).

8. A metering valve as set forth in claim 6 or claim 7 **characterised in that** an intake opening (14) of a recirculation line (15) is closeable by the at least one valve device (1).

9. A metering device (16) comprising a storage container (20) for liquid plastic or at least one liquid plastic component and at least one valve device (1) as set forth in at least one of claims 1 through 5 and/or a metering valve (12) as set forth in at least one of claims 6 through 8.

## Revendications

1. Dispositif de soupape (1) pour au moins un constituant plastique liquide ou un plastique liquide, pourvu d'un dispositif de fermeture (2), lequel, pour la fermeture d'une ouverture de soupape (3) du dispositif de soupape (1), présente un pointeau (5) pouvant être pressé contre un siège (4), dans lequel le pointeau (5) et/ou le siège (4) sont conçus ou montés de manière flexible, dans lequel le pointeau (5) peut être déplacé par rapport au siège (4) au-delà d'un point d'étanchéité proprement dit, **caractérisé en ce qu'**au moins un capteur (10) destiné à surveiller - de préférence sans contact - la position du pointeau (5) et/ou du siège (4) et/ou le montage de pointeau (6) et/ou le montage de siège (7) est prévu, dont les signaux peuvent être amenés à un dispositif d'évaluation (11), lequel détermine à partir des signaux un signal caractéristique de la fermeture, dans lequel au moins deux positions (P1, P2), lesquelles sont caractéristiques d'états de fermeture prédéfinis du dispositif de fermeture (2), sont mises en mémoire dans le dispositif d'évaluation (11).

2. Dispositif de soupape selon la revendication 1, **caractérisé en ce que** le pointeau (5) et/ou le siège (4) sont constitués au moins en partie de plastique.

3. Dispositif de soupape selon la revendication 2, **caractérisé en ce que** le plastique du pointeau (5) et/ou du siège (4) est déformable élastiquement ou au moins en partie élastiquement.

4. Dispositif de soupape selon la revendication 2 ou 3, **caractérisé en ce que** le plastique du pointeau (5) et/ou du siège (4) est du PEK, de préférence du PEEK.

5. Dispositif de soupape selon au moins l'une des revendications précédentes, **caractérisé en ce que** le pointeau (5) est monté de manière flexible par l'intermédiaire d'un montage de pointeau (6) et/ou le siège (4) est monté de manière flexible par l'intermédiaire d'un montage de siège (7), dans lequel le montage de pointeau (6) et/ou le montage de siège (7) présentent un accumulateur de force (8) ou une partie (9) déformable, de préférence élastiquement.

6. Soupape de dosage (12) pour l'émission dosée au moins d'un constituant plastique liquide ou d'un plastique liquide, pourvue d'au moins un dispositif de soupape (1) selon au moins l'une des revendications 1 à 5.

7. Soupape de dosage selon la revendication 6, **caractérisée en ce qu'**un orifice d'émission (13) de la soupape de dosage (12) peut être fermé par le au moins un dispositif de soupape (1).

8. Soupape de dosage selon la revendication 6 ou 7, **caractérisée en ce qu'**un orifice d'entrée (14) d'une conduite de recirculation (15) peut être fermé par le au moins un dispositif de soupape (1).

9. Soupape de dosage (16) pourvue d'un réservoir de stockage (20) pour du plastique liquide ou au moins un constituant plastique liquide et d'au moins un dispositif de soupape (1) selon au moins l'une des revendications 1 à 5 et/ou d'une soupape de dosage (12) selon au moins l'une des revendications 6 à 8.
